# EUROPÄISCHE PATENTSCHRIFT

(11) **EP 4 337 873 B1**
(45) Veröffentlichungstag und Bekanntmachung des Hinweises auf die Patenterteilung: **17.09.2025**
(21) Anmeldenummer: 22724410.0
(22) Anmeldetag: 02.05.2022
(51) Int. Cl.: F16C 19/18, F16C 23/08, F16C 21/00, F16C 33/66

(54) **ZWEIREIHIGES KUGELLAGER**
DOUBLE-ROW BALL BEARING
ROULEMENT À BILLES À DOUBLE RANGÉE

(30) Priorität: 10.05.2021 DE 102021112133
(43) Veröffentlichungstag der Anmeldung: 20.03.2024
(73) Patentinhaber: Schaeffler Technologies AG & Co. KG, 91074 Herzogenaurach (DE)
(72) Erfinder: BEDENK, Johannes, 97531 Theres (DE); MURTI, Vittal, Stratford, N5A 7R5 (CA)
(86) Internationale Anmeldenummer: PCT/DE2022/100326
(87) Internationale Veröffentlichungsnummer: WO 2022/237933

(56) Entgegenhaltungen:
- EP-A1- 3 753 850
- FR-A- 427 930
- US-A- 1 262 208
- US-A- 1 364 675
- US-B1- 6 168 530

## Beschreibung

Die Erfindung betrifft ein zweireihiges Kugellager, welches zur Übertragung von Radialkräften sowie zur Übertragung von Axialkräften in beiden Richtungen geeignet ist.

Eine mögliche Bauform eines zweireihigen Kugellagers ist zum Beispiel in der DE 10 2008 061 832 A1 beschrieben. In diesem Fall handelt es sich um ein beidseitig abgedichtetes Lager, wobei zwischen den Wälzkörperreihen ein Freiraum existiert. Dagegen sind in einem aus der DE 10 2015 213 970 A1 bekannten, ebenfalls zweireihigen Kugellager die Kugelreihen derart angeordnet, dass der axiale Abstand der Kugelreihen zueinander kleiner als der Kugeldurchmesser ist.

Die DE 25 18 129 A1 offenbart einen dünnwandigen, spanlos herstellbaren Laufring für ein einreihiges Kugellager. Der Laufring kann gegenüber einer Sitzfläche eine geringfügige Einstellbewegung ausführen, um Wellendurchbiegungen oder Wellenfluchtungsfehler auszugleichen.

Die DE 10 2006 034 729 B3 offenbart ein zweireihiges Pendelrollen- oder -kugellager. Dieses insbesondere für Lenkspindeln von Kraftfahrzeugen vorgesehene Lager soll eine spielarme Lagerung zur Verfügung stellen, wobei sowohl Innenringlaufbahnen als auch Außenringlaufbahnen durch Bleche gebildet sind.

Die 10 2006 028 200 A1 beschreibt ein winkeleinstellbares Wälzlager, welches als Rollenlager ausgebildet ist. Ein Außenring des Rollenlagers ist einteilig ausgebildet und im Wesentlichen spielfrei in einer sphärischen Innenoberfläche eines Gehäuses angeordnet. Die Innenoberfläche des Gehäuses ist mit einer Beschichtung versehen, so dass eine Gleitpaarung mit sehr geringer Reibung gegeben ist. Alternativ kann die Außenoberfläche des Außenrings beschichtet sein. Als mögliche Beschichtungen sind eine Phosphatierung sowie eine ELGO-Glide-Beschichtung genannt.

Aus der DE 10 2014 221 949 B3 ist ein selbst ausrichtendes Schrägkugellager bekannt, welches als Tandemlager ausgebildet und damit zur Übertragung von Axialkräften in genau einer Richtung geeignet ist. Druckwinkelachsen zweier Wälzkörperreihen sind parallel zueinander ausgerichtet.

Hochbelastbare Lagerungen, welche in der Lage sind, Fluchtungsfehler auszugleichen, sind in vielen Fällen als zweireihige Pendelrollenlager ausgebildet. Beispielhaft wird in diesem Zusammenhang auf die Dokumente DE 10 2012 220 261 A1, DE 10 2012 224 148 A1 und DE 10 2011 078 840 A1 hingewiesen. Ein möglicher Käfig für ein Pendelrollenlager ist im Detail beispielsweise in der DE 10 2017 129 773 A1 beschrieben.

Pendelrollenlager sind in der Lage, radial und axiale Kräfte aufzunehmen und kommen in verschiedensten stationären und mobilen Anwendungen, auch in Luftfahrzeugen, zum Einsatz. Ein Käfig für ein zweireihiges Pendelrollenlager, welches zur Verwendung in einem Flugzeug vorgesehen ist, ist beispielsweise in der EP 2 952 760 B1 offenbart.

Hubschrauber mit einem einzigen Hauptrotor sind zum Drehmomentausgleich bekanntermaßen mit einem Heckrotor ausgerüstet. Beispielhaft wird in diesem Zusammenhang auf die Dokumente DE 1 118 017 A und EP 3 023 328 B1 hingewiesen.

Die DE 10 2010 053 671 A1 beschreibt ein mehrreihiges Wälzlager, dessen Außenring eine zumindest abschnittsweise sphärische Außenoberfläche aufweist, die mit einer zumindest abschnittsweise sphärischen Innenoberfläche eines Gehäuses zusammenwirken kann oder zusammenwirkt. Dabei ist eine Lagerreihe durch eine Schrägkugellagerreihe gebildet.

Durch den Heckrotor wird ein Drehmoment um die Hochachse, das heißt Gierachse des Hubschraubers, erzeugt. Wird der Anstellwinkel der Blätter des Heckrotors verstellt, so ändert sich damit auch das vom Heckrotor erzeugte Moment. Diese Verstellung kann vom Piloten insbesondere mittels Pedalen bewirkt werden, wobei die Betätigung der Pedale über einen Linear-Antrieb in eine Verstellung des Anstellwinkels der mindestens zwei Blätter des Heckrotors umgesetzt wird.

Ein Heckrotor eines Hubschraubers ist prinzipiell auf beliebige Weise antreibbar. Ein elektrischer Antrieb eines Heckrotors ist zum Beispiel in der EP 2 412 630 B1 beschrieben.

Die US 1 262 208 A, die FR 427 930 A und die US 1 364 675 A beschreiben jeweils ein zweireihiges Kugellager mit einem kippbar in einem Gehäuseteil gelagerten Außenring, der zwei ringförmige, von einander beabstandete, konvex gekrümmte Oberflächenabschnitte als Gleitflächen aufweist, die ein und dieselbe kugelige Oberfläche beschreiben.

Die EP 3 753 850 A1 beschreibt einen Anti-Drehmoment-Rotor für einen Hubschrauber, wobei ein Kugellager in einem eine Blattverstellung aufweisenden Heckrotor verwendet wird.

Der Erfindung liegt die Aufgabe zugrunde, eine gegenüber dem genannten Stand der Technik weiterentwickelte Wälzlagerung, welche insbesondere für die Verwendung in einem eine Blattverstellung aufweisenden Heckrotor eines Hubschraubers geeignet ist, anzugeben.

Diese Aufgabe wird erfindungsgemäß gelöst durch ein zweireihiges Kugellager mit den Merkmalen des Anspruchs 1. Das Kugellager umfasst einen Innenring und einen Außenring als Lagerringe, sowie zwischen den Lagerringen abrollende, zur Übertragung von Axialkräften zwischen den Lagerringen in beiden Richtungen vorgesehene Wälzkörper, das heißt Kugeln, wobei der Außenring beschränkt kippbar in einem Gehäuseteil gelagert ist.

Durch die kippbare Lagerung des Außenrings im Gehäuseteil sind Fluchtungsfehler zwischen Innenring und Außenring einerseits und dem Gehäuseteil andererseits ausgleichbar. Insbesondere ist das Kipplager, welches durch den Außenring und das Gehäuseteil als Gleitlagerkomponenten gebildet ist, in der Lage, Verkippungen von ± 2°oder mehr aufzunehmen. Hierbei kann ein Kippmoment vom Innenring über die Wälzkörper auf den Außenring übertragen werden, ohne den Innenring signifikant gegenüber dem Außenring zu verkippen. Die Verkippung tritt somit ausschließlich oder nahezu ausschließlich zwischen dem Außenring und dem Gehäuseteil auf.

Gemäß einer möglichen Ausgestaltung umfasst das Gleitlager ein erstes Paar an Gleitflächen, welche durch den Außenring beziehungsweise das Gehäuseteil gebildet sind, und ein zweites Paar an Gleitflächen, die in entsprechender Weise gebildet sind. Jedes Paar an Gleitflächen stellt einen insgesamt ringförmigen Gleitlagerabschnitt dar, wobei die Gleitlagerabschnitte voneinander beabstandet und - solange keine Verkippung gegeben ist - spiegelsymmetrisch zu einer Mittelebene des Kugellagers angeordnet sind. Jeder Gleitlagerabschnitt kann Radialkräfte sowie Axialkräfte in genau einer Richtung aufnehmen.

Gleitbeläge des Kipplagers können sich auf dem Außenring oder in dem den Außenring kontaktierenden Gehäuseteil befinden. Eine ideale Kinematik des Kipplagers ist in jedem Fall realisierbar, indem die beiden Gleitflächen des Außenrings, welche als ringförmige, voneinander beabstandete, konvex gekrümmte Oberflächenabschnitte ausgebildet sind, auf ein und derselben gedachten Kugeloberfläche liegen. Entsprechendes gilt für die Innenoberfläche des Gehäuseteils, soweit diese als Gleitfläche ausgebildet ist. Soll einer Kippbewegung zwischen dem Außenring und dem Gehäuseteil ein mit zunehmendem Kippwinkel wachsender Widerstand entgegengesetzt werden, so können gemäß einer optionalen Ausgestaltung zu diesem Zweck die in Axialrichtung am weitesten voneinander beabstandeten Bereich der ansonsten kugeligen, als Gleitfläche dienenden Innenoberfläche des Gehäuseteils eine von einer sphärischen Form abweichende Form aufweisen.

Gemäß einer vorteilhaften Weiterbildung ist zwischen den beiden konvex gekrümmten Gleitflächen des Außenrings, einer in Axialrichtung des Kugellagers zwischen diesen Gleitflächen liegenden Außenumfangsfläche des Außenrings und einer Innenumfangsfläche des Gehäuseteils ein Schmiermittelraum gebildet, welcher insbesondere mit Fett als Schmiermittel befüllt ist. Hierbei kann die Außenumfangsfläche des Außenrings, soweit sie zwischen den Gleitflächen liegt, zylindrisch sein. Ebenso kann die den Schmiermittelraum begrenzende Innenumfangsfläche des Gehäuseteils zumindest partiell zylindrisch sein.

Bei dem als Gleitlagerkomponente ausgebildeten Gehäuseteil handelt es sich erfindungsgemäß um einen Gehäusering, welcher im bestimmungsgemäßen Betrieb, das heißt bei freier Rotierbarkeit des Innenrings gegenüber dem Außenring, drehfest mit dem Außenring gekoppelt ist.

Eine drehfeste und zugleich eine beschränkte Verkippung zulassende Kopplung zwischen dem Außenring und dem Gehäusering ist erfindungsgemäß durch ein Sollbruchelement, insbesondere in Form eines Pins, hergestellt, wobei das Sollbruchelement zur Freigabe einer Relativverdrehung zwischen dem Außenring und dem Gehäuseteil bei Überschreitung eines zwischen dem Innenring und dem Außenring wirkenden Maximalmoments ausgebildet ist.

Dies bedeutet, dass das Kipplager als Rotativ-Gleitlager in Funktion tritt, sobald das Wälzlager versagt oder zu schwergängig ist. Gerade in einem solchen Fall, das heißt im Notbetrieb, ist ein Schmiermittelvorrat, welcher sich zwischen einer zylindrischen Außenumfangsfläche des Außenrings und einer Innenumfangsfläche des Gehäuseteils befindet, von Vorteil.

Das zweireihige Kugellager ist beispielsweise als Lager in O-Anordnung ausgebildet. Alternativ kommt eine X-Anordnung in Betracht. In jedem Fall kann das zweireihige Kugellager beidseitig abgedichtet sein. Das Schmiermittel, welches sich im Wälzlagerinnenraum befindet, ist nicht notwendigerweise mit dem Schmiermittel zur Schmierung des Not-Gleitlagers identisch. Insbesondere kann Öl zur Wälzlagerschmierung vorgesehen sein.

Die Lagerringe können ein- oder mehrteilig aufgebaut sein. In typischen Ausgestaltungen handelt es sich beim Außenring um den drehenden Lagerring und beim Innenring um den nicht drehenden Lagerring. Ebenso sind Bauformen realisierbar, bei welchen der Innenring den drehenden Lagerring darstellt oder beide Lagerring rotieren.

Nachfolgend wird ein Ausführungsbeispiel der Erfindung anhand einer Zeichnung näher erläutert. Hierin zeigt:

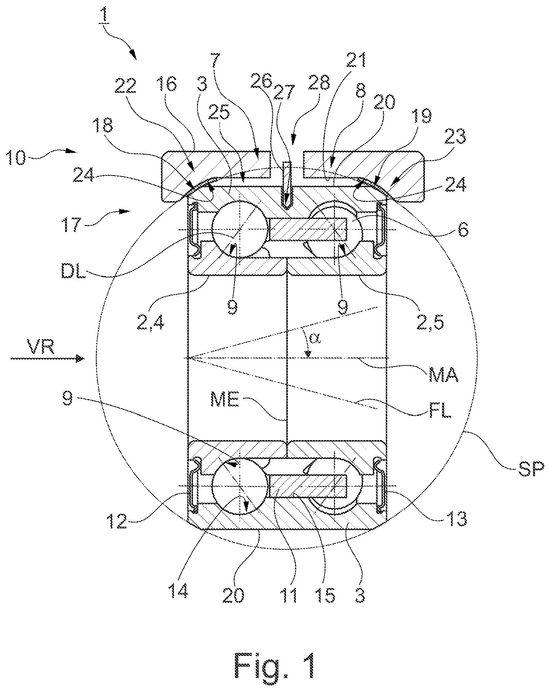

- Fig. 1: ein zweireihiges Kugellager in einer Schnittdarstellung.

Ein als zweireihiges Kugellager ausgebildetes Wälzlager 1 ist Teil einer insgesamt mit 10 bezeichneten Blattverstellung eines Heckrotors eines Hubschraubers. Das Wälzlager 1 weist einen Innenring 2 und einen Außenring 3 als Lagerringe auf, wobei der Innenring 2 im vorliegenden Fall zweiteilig, nämlich aus einem ersten Innenringteil 4 und einem spiegelbildlich zu diesem angeordneten, identisch geformten Innenringteil 5, gebildet ist. Jedes Innenringteil 4, 5 stellt eine Innenringlaufbahn 9 bereit, auf welcher Kugeln als Wälzkörper 6 abrollen. Die zugleich Außenringlaufbahnen 14 kontaktierenden Kugeln 6 sind somit in Form von zwei Wälzkörperreihen 7, 8 angeordnet. Eine Mittelebene ME, welche zwischen die Innenringteile 4, 5 gelegt ist, befindet sich mittig zwischen den Wälzkörperreihen 7, 8. Drucklinien durch die Mittelpunkte der Wälzkörper 6 sind mit DL bezeichnet. Insgesamt handelt es sich bei dem Wälzlager 1 um ein zweireihiges Lager in O-Anordnung. Der im Gegensatz zum Innenring 2 einteilige Außenring 3 weist einen ringförmigen Mittelsteg 15 auf, an welchen die Außenringlaufbahnen 14 anschließen. Die Wälzkörper 6 sind in einem Käfig 11 geführt. An beiden Stirnseiten des Wälzlagers 1 befindliche Dichtungen sind mit 12, 13 bezeichnet.

Der Außenring 3 ist in einem Gehäuseteil 16 aufgenommen, welches als Gehäusering ausgebildet ist. Zwischen dem Gehäusering 16 und dem Außenring 3 ist ein Kipplager in Form eines Gleitlagers 17 gebildet. In der in Figur 1 dargestellten, nicht verkippten Einstellung des Wälzlagers 1 weisen die ringförmigen Komponenten 2, 3, 16 eine einheitliche Mittelachse MA auf. Wird der Innenring 2 und mit diesem auch der Außenring 3 gegenüber dem Gehäuseteil 16 verkippt, was einen Fluchtungsfehler bedeutet, so ergibt sich ein in Figur 1 übertrieben dargestellter Winkel α zwischen einer Achse FL und der Mittelachse MA. Die Verkippung um den Winkel α wird vollständig vom Kipplager 17 aufgenommen und kann bis zu 2° betragen.

Beim bestimmungsgemäßen Betrieb der Blattverstellung 10 rotiert der Außenring 3 zusammen mit dem Gehäusering 16, wogegen der Innenring 2 einen stehenden Lagerring darstellt. Die Verstellung eines Blattes des Heckrotors erfolgt, indem der Innenring 2 in Verstellrichtung VR, das heißt längs der Mittelachse MA, verschoben wird. Hierbei wird zwangsläufig auch der Außenring 3 sowie der mit diesem rotierende Gehäusering 16 mit verschoben. Etwaige geringfügige Verkippungen zwischen dem Außenring 3 und dem Gehäusering 16 spielen bei diesem Verstellvorgang dank des Kipplagers 17 keine Rolle.

Das Kipplager 17 umfasst zwei ringförmige Gleitflächen 18, 19, welche durch den Außenring 3 bereitgestellt werden und eine sphärische Form SP definieren. Die beiden voneinander beabstandeten Gleitflächen 18, 19 grenzen an die Stirnflächen des Außenrings 3 und sind spiegelsymmetrisch zur Mittelebene ME angeordnet. Zwischen den beiden Gleitflächen 18, 19 befindet sich eine im Wesentlichen zylindrische Außenumfangsfläche 20 des Außenrings 3. Die Außenumfangsfläche 20 ist konzentrisch umgeben von einer Innenumfangsfläche 21 des Gehäuserings 16. An die Innenumfangsfläche 21 grenzen die mit 22, 23 bezeichneten Gleitlagerabschnitte, welche jeweils einerseits durch eine der Gleitflächen 18, 19 und andererseits durch einen Gleitbelag 24 auf dem Gehäusering 16 gebildet werden. Zwischen der Außenumfangsfläche 20 des Außenrings 3 und der Innenumfangsfläche 21 des Gehäuseteils 16 ist ein mit Fett befüllter Schmiermittelraum 25 gebildet.

Solange der Außenring 3 gegenüber dem Innenring 2 frei drehbar ist, hat das Gleitlager 17 ausschließlich die Funktion eines Kipplagers. Jede Verdrehung des Außenrings 3 um die Mittelachse MA geht hierbei mit einer entsprechenden Verdrehung des Gehäuserings 16 um die Mittelachse MA einher. Zu diesem Zweck ist ein Pin 26 fest in eine Bohrung 27 im Außenring 3 eingesetzt. Der Pin 26 greift zugleich in eine Öffnung 28 ein, welche sich im Gehäuseteil 16 befindet.

Wie aus Figur 1 hervorgeht, hat der Pin 26 in der Öffnung 28 nennenswertes Spiel in Längsrichtung der Mittelachse MA. Dieses Spiel ermöglicht die beschriebene Verkippung um bis zu 2° zwischen dem Außenring 3 und dem Gehäusering 16. In hierzu orthogonaler Richtung, das heißt in Umfangsrichtung des Außenrings 3 sowie des Gehäuserings 16, ist dagegen kein oder nur minimales Spiel des Pins 26 gegeben. Relativverdrehungen zwischen dem Außenring 3 und dem Gehäusering 16 sind damit ausgeschlossen. Treten jedoch zu hohe Kräfte zwischen dem Außenring 3 und dem Gehäuseteil 16 auf, welche im Extremfall auf eine Blockade zwischen Innenring 2 und Außenring 3 zurückzuführen sein können, so bricht der Pin 26, womit er ein Sollbruchelement darstellt. In diesem Moment wird eine Rotation zwischen dem Außenring 3 und dem Gehäusering 16 freigegeben, was eine Umfunktionierung des Gleitlagers 17 zum Rotativlager bedeutet. In diesem Zustand trägt der im Schmiermittelraum 25 befindliche Schmiermittelvorrat signifikant zur Wärmeabfuhr bei. Die Kinematik der Blattverstellung 10 bleibt auch bei dieser Notfunktion des ansonsten nur als Kipplager dienenden Gleitlagers 17 erhalten.

### Bezugszeichenliste

- 1: Wälzlager, zweireihiges Kugellager
- 2: Innenring
- 3: Außenring
- 4: Innenringteil
- 5: Innenringteil
- 6: Wälzkörper, Kugel
- 7: Wälzkörperreihe
- 8: Wälzkörperreihe
- 9: Innenringlaufbahn
- 10: Blattverstellung
- 11: Käfig
- 12: Dichtung
- 13: Dichtung
- 14: Außenringlaufbahn
- 15: Mittelsteg
- 16: Gehäuseteil, Gehäusering
- 17: Gleitlager, Kipplager
- 18: Gleitfläche des Außenrings
- 19: Gleitfläche des Außenrings
- 20: Außenumfangsfläche
- 21: konkave Innenumfangsfläche
- 22: Gleitlagerabschnitt
- 23: Gleitlagerabschnitt
- 24: Gleitbelag
- 25: Schmiermittelraum
- 26: Pin, Sollbruchelement
- 27: Bohrung im Außenring
- 28: Öffnung im Gehäuseteil

- α: Winkel
- DL: Drucklinie
- FL: Achse des Innenrings mit Fluchtungsfehler
- MA: Mittelachse
- ME: Mittelebene
- SP: sphärische Form
- VR: Verstellrichtung

## Patentansprüche

1. Zweireihiges Kugellager, mit einem Innenring (2) und einem Außenring (3) als Lagerringen (2, 3), sowie zwischen den Lagerringen (2, 3) abrollenden, zur Übertragung von Axialkräften zwischen den Lagerringen (2, 3) in beiden Richtungen vorgesehenen Kugeln (6), wobei der Außenring (3) kippbar in einem Gehäuseteil (16) gelagert ist,
wobei der Außenring (3) zwei ringförmige, voneinander beabstandete, konvex gekrümmte Oberflächenabschnitte als Gleitflächen (18, 19) aufweist, welche ein und dieselbe kugelige Oberfläche (SP) beschreiben,
**dadurch gekennzeichnet, dass**
das Gehäuseteil (16) als Gehäusering ausgebildet ist, der im bestimmungsgemäßen Betrieb, das heißt bei freier Rotierbarkeit des Innenrings (2) gegenüber dem Außenring (3), drehfest mit dem Außenring (3) gekoppelt ist,
wobei zur Herstellung der drehfesten und zugleich eine beschränkte Verkippung zulassenden Kopplung zwischen dem Außenring (3) und dem Gehäusering (2) ein Sollbruchelement (26), insbesondere in Form eines Pins, vorgesehen ist, welches zur Freigabe einer Relativverdrehung zwischen dem Außenring (3) und dem Gehäuseteil (16) bei Überschreitung eines zwischen dem Innenring (2) und dem Außenring (3) wirkenden Maximalmoments ausgebildet ist.

2. Kugellager nach Anspruch 1, **dadurch gekennzeichnet, dass** durch den Außenring (3) und das Gehäuseteil (16) ein als Gleitlager (17) ausgebildetes Kipplager gebildet ist.

3. Kugellager nach Anspruch 2, **dadurch gekennzeichnet, dass** zwischen den beiden konvex gekrümmten Gleitflächen (18, 19) des Außenrings (3), einer in Axialrichtung zwischen diesen Gleitflächen (18, 19) liegenden Außenumfangsfläche (20) des Außenrings (3) und einer Innenumfangsfläche (21) des Gehäuseteils (16) ein Schmiermittelraum (25) gebildet ist.

4. Kugellager nach Anspruch 3, **dadurch gekennzeichnet, dass** die den Schmiermittelraum (25) begrenzende Innenumfangsfläche (21) des Gehäuseteils (16) zumindest partiell zylindrisch ist.

5. Kugellager nach einem der Ansprüche 1 bis 4, **dadurch gekennzeichnet, dass** die Lagerung des Außenrings (3) im Gehäuseteil (16) eine Verkippung zwischen Außenring (3) und Gehäuseteil (16) von mindestens ± 2° ermöglicht.

6. Kugellager nach einem der Ansprüche 1 bis 5, **dadurch gekennzeichnet, dass** dieses als zweireihiges Lager in O-Anordnung ausgebildet ist.

7. Verwendung eines zweireihigen Kugellagers mit einem Innenring (2) und einem Außenring (3) sowie zwischen den Lagerringen (2, 3) abrollenden, zur Übertragung von Axialkräften zwischen den Lagerringen (2, 3) in beiden Richtungen vorgesehenen Kugeln (6), wobei der Außenring (3) kippbar in einem Gehäuseteil (16) gelagert ist, wobei der Außenring (3) zwei ringförmige, voneinander beabstandete, konvex gekrümmte Oberflächenabschnitte als Gleitflächen (18, 19) aufweist, welche ein und dieselbe kugelige Oberfläche (SP) beschreiben, in einem eine Blattverstellung (10) aufweisenden Heckrotor eines Hubschraubers.

## Claims

1. A double-row ball bearing, having an inner ring (2) and an outer ring (3) as bearing rings (2, 3), and having balls (6) that roll between the bearing rings (2, 3) for transmitting axial forces between the bearing rings (2, 3) in both directions, wherein the outer ring (3) is tiltably mounted in a housing part (16),
wherein the outer ring (3) has two annular, convexly curved surface sections spaced apart from one another as sliding surfaces (18, 19), which describe one and the same spherical surface (SP),
**characterised in that**
the housing part (16) is designed as a housing ring coupled in a rotationally fixed manner to the outer ring (3) during normal operation, i.e. when the inner ring (2) can be freely rotated relative to the outer ring (3),
wherein, in order to produce the rotationally fixed coupling between the outer ring (3) and the housing ring (2), which at the same time allows for limited tilting, a predetermined breaking element (26), in particular in the form of a pin, is provided, which is designed to release a relative rotation between the outer ring (3) and the housing part (16) when a maximum torque acting between the inner ring (2) and the outer ring (3) is exceeded.

2. The ball bearing according to claim 1, **characterised in that** a tilting bearing designed as a sliding bearing (17) is formed by the outer ring (3) and the housing part (16).

3. The ball bearing according to claim 2, **characterised in that** a lubricant chamber (25) is formed between the two convexly curved sliding surfaces (18, 19) of the outer ring (3), an outer circumferential surface (20) of the outer ring (3) lying in the axial direction between said sliding surfaces (18, 19) and an inner circumferential surface (21) of the housing part (16).

4. The ball bearing according to claim 3, **characterised in that** the inner circumferential surface (21) of the housing part (16) delimiting the lubricant chamber (25) is at least partially cylindrical.

5. The ball bearing according to any one of claims 1 to 4, **characterised in that** the mounting of the outer ring (3) in the housing part (16) allows a tilting of at least ± 2° between the outer ring (3) and the housing part (16).

6. The ball bearing according to any one of claims 1 to 5, **characterised in that** said ball bearing is designed as a double-row bearing in an O-arrangement.

7. A use of a double-row ball bearing comprising an inner ring (2) and an outer ring (3) and balls (6) which roll between the bearing rings (2, 3) for transmitting axial forces between the bearing rings (2, 3) in both directions, wherein the outer ring (3) is tiltably mounted in a housing part (16), wherein the outer ring (3) has two annular, convexly curved surface sections spaced apart from one another as sliding surfaces (18, 19), which describe one and the same spherical surface (SP), in a helicopter tail rotor having a blade feathering system (10).

## Revendications

1. Roulement à billes à double rangée, comportant une bague intérieure (2) et une bague extérieure (3) comme bagues de roulement (2, 3), et des billes (6) roulant entre les bagues de roulement (2, 3), permettant de transmettre les forces axiales entre les bagues de roulement (2, 3) dans les deux sens, la bague extérieure (3) étant montée en basculement dans une partie de boîtier (16),
la bague extérieure (3) présentant deux sections de surface annulaires, espacées l'une de l'autre et courbées de manière convexe, comme surfaces de glissement (18, 19), qui décrivent une seule et même surface sphérique (SP),
**caractérisé en ce que**
la partie de boîtier (16) est conçue comme une bague de boîtier qui, en fonctionnement conforme, c'est-à-dire lorsque la bague intérieure (2) peut tourner librement par rapport à la bague extérieure (3), est accouplée solidaire en rotation à la bague extérieure (3),
afin de réaliser un accouplement solidaire en rotation qui permet en même temps un basculement limité entre la bague extérieure (3) et la bague de boîtier (2), un élément de rupture théorique (26) étant prévu, en particulier sous la forme d'une goupille, conçu pour libérer une rotation relative entre la bague extérieure (3) et la partie de boîtier (16) lorsqu'un couple maximal agissant entre la bague intérieure (2) et la bague extérieure (3) est dépassé.

2. Roulement à billes selon la revendication 1, **caractérisé en ce qu'**un roulement basculant conçu comme roulement lisse (17) est formé par la bague extérieure (3) et la partie de boîtier (16).

3. Roulement à billes selon la revendication 2, **caractérisé en ce qu'**une chambre de lubrifiant (25) est formée entre les deux surfaces de glissement (18, 19) courbées de manière convexe de la bague extérieure (3), une surface périphérique extérieure (20) de la bague extérieure (3) se trouvant dans la direction axiale entre ces surfaces de glissement (18, 19) et une surface périphérique intérieure (21) de la partie de boîtier (16).

4. Roulement à billes selon la revendication 3, **caractérisé en ce que** la surface circonférentielle intérieure (21) de la partie de boîtier (16) délimitant la chambre de lubrifiant (25) est au moins partiellement cylindrique.

5. Roulement à billes selon l'une des revendications 1 à 4, **caractérisé en ce que** le palier de la bague extérieure (3) dans la partie de boîtier (16) permet un basculement entre la bague extérieure (3) et la partie de boîtier (16) d'au moins ± 2°.

6. Roulement à billes selon l'une des revendications 1 à 5, **caractérisé en ce que** celui-ci est conçu sous la forme de roulement à double rangée selon un agencement en O.

7. Utilisation d'un roulement à billes à double rangée comportant une bague intérieure (2) et une bague extérieure (3) et des billes (6) roulant entre les bagues de roulement (2, 3), permettant de transmettre des forces axiales entre les bagues de roulement (2, 3) dans les deux sens, la bague extérieure (3) étant montée en basculement dans une partie de boîtier (16), la bague extérieure (3) présentant deux sections de surface annulaires, espacées l'une de l'autre et courbées de manière convexe comme surfaces de glissement (18, 19), qui décrivent une seule et même surface sphérique (SP), dans un rotor de queue d'un hélicoptère présentant un réglage de pale (10).
